(19) Europäisches Patentamt

European Patent Office

Office européen des brevets

(11) Veröffentlichungsnummer: **0 250 830 B1**

(12) **EUROPÄISCHE PATENTSCHRIFT**

(45) Veröffentlichungstag der Patentschrift: **12.02.92**

(51) Int. Cl.⁵: **H01M  2/28**, B22D 25/04

(21) Anmeldenummer: **87107333.4**

(22) Anmeldetag: **20.05.87**

(54) **Vorrichtung zum Verbinden von Polbrücken und Polen mit den Fahnenableitern eines Plattensatzes für eine Akkumulatorenzelle.**

(30) Priorität: **21.06.86 DE 3620891**

(43) Veröffentlichungstag der Anmeldung:
**07.01.88 Patentblatt  88/01**

(45) Bekanntmachung des Hinweises auf die
Patenterteilung:
**12.02.92 Patentblatt  92/07**

(84) Benannte Vertragsstaaten:
**AT DE FR GB SE**

(56) Entgegenhaltungen:
**DE-A- 3 434 941**
**GB-A- 872 938**
**GB-A- 2 078 576**
**US-A- 4 175 725**

(73) Patentinhaber: **VARTA Batterie Aktiengesellschaft
Am Leineufer 51
W-3000 Hannover 21(DE)**

(72) Erfinder: **Kallup, Bernhard, Dr., Dipl.-Ing.
Römerstrasse 9
W-6380 Bad Homburg(DE)**
Erfinder: **Glittenberg, Wolfgang, Dipl.-Ing.
Weg zum Stadtwald 17a
W-4320 Hattingen(DE)**
Erfinder: **Kubis, Christian, Dipl.-Ing.
Haydnweg 11
W-5860 Iserlohn(DE)**
Erfinder: **Richter, Gerolf, Dr., Dipl.-Ing.
Berliner Strasse 114
W-5800 Hagen7(DE)**
Erfinder: **Ressel, Christian, Dipl.-Ing.
Liebigstrasse 5
W-6370 Oberursel(DE)**

(74) Vertreter: **Kaiser, Dieter Ralf, Dipl.-Ing.
Gundelhardtstrasse 72
W-6233 Kelkheim/Ts.(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist eine Vorrichtung zum Anbringen von Polbrücken und Polen durch Angießen an die Fahnenableiter eines komplett montierten und von einer Aufnahmekassette über Kopf gehalterten Plattensatzes für eine Akkumulatorenzelle in Gestalt einer Gießform, die zur getrennten Aufnahme der negativen und der positiven Fahnen des Plattensatzes als Doppelwerkzeug ausgebildet ist, und die eine Anordnung zu einer Zweistufenkühlung umfaßt.

Während früher die Fahnen aller negativen sowie aller positiven Elektroden einer Akkumulatorenzelle einzeln an die Polbrücken entsprechenden Vorzeichens angeschweißt wurden, hat sich heute zugunsten eines rationelleren Fertigungsablaufes das sog. Cast-On-Strap-Verfahren (COS) weitgehend durchgesetzt. Bei diesem erfolgt die Anbringung beider Polbrücken und Pole an den mit Separatoren komplett vorgefertigten Plattensatz simultan in der Weise, daß der Plattensatz über Kopf gehaltert wird, und die nach unten hängenden Fahnen in mit schmelzflüssigem Blei, dem späteren Brückenblei und dem Polblei, gefüllten Gießformen eintauchen, wobei die Fahnen zuerst angeschmolzen werden und nach dem Erstarren des Formeninhalts und der angeschmolzenen Fahnenanteile fest mit den so entstandenen Brücken und Polen verbunden sind. Das Erstarren des Bleis wird schrittweise durch Eintauchen der Formen in ein ruhendes oder fließendes Kühlmedium herbeigeführt. Wegen der räumlichen Trennung von positiven und negativen Fahnen am Plattensatz bilden die Gießformen ein Doppelwerkzeug, das in seine Arbeitsstellung gegen den Plattensatz gehoben und abgesenkt werden kann. Umgekehrt können auch die Gießformen feststehen und die Fahnen durch Absenken des Plattensatzes in das Brückenblei eintauchen.

Die Praxis des COS-Verfahrens hat gezeigt, daß die Gießformen, deren Schmelzinhalte neben den positiven bzw. negativen Polen auch mit der positiven bzw. negativen Polbrücke korrespondieren, dem Wärmehaushalt der Plattenfahnen in vielen Fällen nicht optimal angepaßt sind. Ein ungleichmäßiger Wärmeaustausch zwischen dem Brückenblei und den eintauchenden Fahnen ist u.a. dann zu erwarten, wenn bei gleicher Brückengröße die Anzahl der an die positive Polbrücke anzubringenden Plattenfahnen ungleich derjenigen der für die negative Polbrücke bestimmten Fahnen ist.

In der deutschen Patentanmeldung P 34 34 941.3 ist bereits vorgeschlagen worden, daß beim Wärmeaustausch mit dem Schmelzbad benachteiligte Fahnenspezies zum Ausgleich einer gegenüber den anderen Fahnen verspäteten Abkühlung zu unterwerfen, so daß ihr Wärmedefizit durch das längere Verbleiben in der Bleischmelze gedeckt werden kann.

Der GB-PS 872,938 ist eine Vorrichtung zum Angießen von Polbrücken an die Fahnen eines vollständigen Plattensatzes nach dem COS-Prinzip entnehmbar, bei welcher der unterschiedlichen Fahnenzahl für die beiden Plattenpolaritäten und deren unterschiedlichem Bedarf an Brückenblei durch zwei verschieden große Kavitäten in einem massiven Formenblock Rechnung getragen wird. Eine differenzierte Kühlung der Formkavitäten ist mit dieser Vorrichtung nicht möglich, so daß z.B. eine Vorerstarrung der beiden Pole vor der Erstarrung der beiden Brücken ausgeschlossen ist.

Der Erfindung liegt daher die Aufgabe zugrunde, eine Gießvorrichtung nach dem eingangs formulierten Gattungsbegriff anzugeben, welche für alle Plattenfahnen gleiche Anschmelz- und Abkühlungsbedingungen gewährleistet.

Die Aufgabe wird erfindungsgemäß mit den im kennzeichnenden Teil des Anspruchs 1 angegebenen Mitteln gelöst.

Anhand zweier Figurendarstellungen wird die Erfindung im folgenden näher erläutert.

Figur 1 zeigt COS-Gießformen mit Polen, Polbrücken und Fahnen im Längsschnitt.

Figur 2 zeigt die gleichen Gießformen im Querschnitt in den beiden Kühlpositionen.

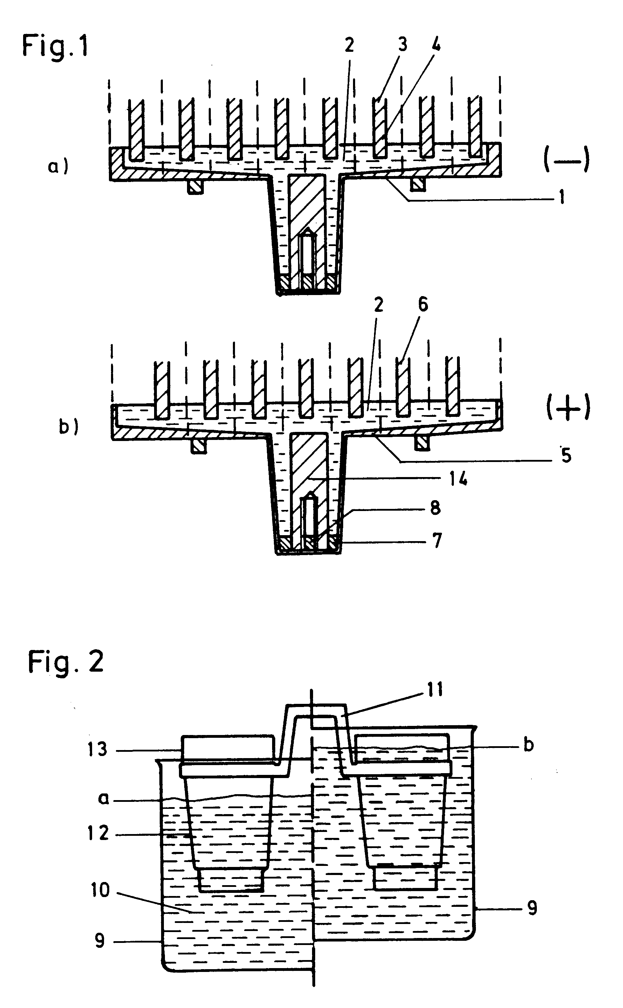

Gemäß Figur 1a ist die Zahl der dem Brückenblei (2) in einer negativen Gießform (1) zugeordneten Plattenfahnen (3) um 1 größer als beim Brückenblei in der positiven Gießform (5) der Fig. 1b. Beide Gießformen sind im Doppelwerkzeug höhengleich angeordnet und in ihrem gegenseitigen Abstand an die Poldistanz der Zelle angepaßt.

Betrachtet man zunächst die negative Gießform samt Inhalt für sich, so findet an jeder in die Schmelze eintauchenden Fahnenoberfläche eine Wärmezufuhr und an jeder Fahnenquerschnittsfläche (dargestellt durch die Spur 4) eine Wärmeabfuhr statt. Die thermischen Bedingungen der Fahnen untereinander sind dann ausgeglichen, wenn die auf jede Fahne entfallende Wärmemenge, gegeben jeweils durch das Volumen und die Wärmekapazität des zum Einzugsbereich der Fahne gehörenden Brückenbleis nebst umgebenden Formenwandabschnitts im wesentlichen von gleicher Größe ist. Zur Verbesserung der mechanischen Stabilität der Form ist dieser Zustand für die Außenfahnen dadurch realisiert, daß das darauf entfallende Brückenvolumen verkleinert und die umgebende Formenwandung stattdessen verstärkt ist. Dadurch kann das aus Fahnen, Brückenblei und Gießform bestehende Gesamtsystem in 8 einer jeden Fahne zuordbare Abschnitte gleicher Länge (gestrichelte Linien) aufgeteilt werden, die identische Wärmeinhalte besitzen. Die bildliche Darstellung hebt auf diese Weise hervor, daß das eben definierte Gesamtsystem gewissermaßen aus einer Anzahl von thermisch gleichwertigen Blöcken aufgebaut ist.

Da nun der Anguß des Brückenbleis in der negativen Form simultan mit dem Anguß des Brückenbleis in der positiven Form (5) erfolgt und beide Formen anschließend einer gemeinsamen Zweistufenkühlung unterliegen, ist es erforderlich, daß sich die Gleichheit der an den negativen Fahnen ausgetauschten Wärmemengen auch auf die positiven Fahnen (6) erstreckt. Ist die Zahl der positiven Fahnen, wie in diesem Fall, von derjenigen der negativen Fahnen verschieden, so liegt dennoch die erfindungsgemäße Lösung für eine einwandfreie Einbindung aller Fahnen in das ihnen jeweils zugeordnete Brückenblei darin, daß jede positive Fahne einem gleichen Wärmeaustausch wie die negativen Fahnen unterliegt, so daß im Sinne des oben Gesagten die durch gestrichelte Linien dargestellten Teilabschnitte der positiven Gießform samt Inhalt den Teilabschnitten der negativen Gießform hinsichtlich ihrer Wärmehaushalte weitgehend äquivalent sind.

Mit anderen Worten: die Gießformhälften müssen so dimensioniert und ihre Wanddicken so gestaltet sein, daß ihr Aufbau zusammen mit dem enthaltenden Brückenblei und den in dieses eintauchenden Fahnenabschnitten durch ein Blocksystem aus thermisch gleichwertigen Blöcken um jede Fahne darstellbar ist.

Praktisch läßt sich diese Bedingung beispielsweise dadurch erfüllen, daß die Wanddicke der mit der kleineren Fahnenzahl korrespondierenden Gießform nur an der Stirnfläche (linke Hälfte von Figur 1b) oder an mehreren Flächen, beispielsweise zusätzlich am äußeren Abschnitt ihrer Bodenfläche (rechte Hälfte von Figur 1b), reduziert ist. Dabei wird deutlich, daß ohne diese Maßnahmen die Blöcke der äußeren Fahnen (in die Schmelze eintauchender Fahnenabschnitt, diesem zugehöriger Teil des Polbrückenbleis und die daran angrenzenden Wandteile der Gießform, in der Figur jeweils durch gestrichelte Linien abgegrenzt) einen größeren Wärmeinhalt besitzen würden als die mittleren Blockabschnitte, weil der Beitrag, den die Formenwandteile jeweils zur Gesamtwärmekapazität eines Blockabschnittes leisten, hier wegen der unveränderten Stärke des Wandmaterials übermäßig hoch wäre. Durch die Wanddickenreduzierung wird auch erreicht, daß negative und positive Polbrücken von annähernd gleicher Länge entstehen. Wird die positive Gießform dagegen in Anlehnung an die negative Gießform nach Figur 1a ausgeführt, resultiert aus dem erfindungsgemäßen Handeln mit Rücksicht auf die geringere Fahnenzahl eine kürzere positive Brücke.

Besonders günstige Voraussetzungen für die Gestaltung der Gießform im Sinne der Erfindung liegen dann vor, wenn die Plattenfahnen beider Polaritäten aus Blei oder der gleichen Bleilegierung bestehen und wenn die in die Schmelze eintauchende Oberfläche, die wärmeabführende Querschnittsfläche und das in die Schmelze eintauchende Volumen einer jeden positiven und negativen Plattenfahne im wesentlichen gleich sind. Aber auch mit ungleichen Plattenfahnen, wenn zum Beispiel negative Fahnen aus Kuper, das auch mit Blei bzw. Blei-Zinn-Legierungen beschichtet sein kann, verwendet werden, muß die Gießform mit Inhalt hinsichtlich ihres Wärmehaushalts einem Aufbau aus thermisch einheitlichen Blöcken uneingeschränkt entsprechen.

Die zum Angießen der Polbrücken an den kompletten Plattensatz benutzten Gießformen sind insbesondere für die zusätzliche Aufnahme einer Poleinlage (14) eingerichtet. Für diesen Zweck besitzen sowohl die negative wie auch die positive Gießform eine napfförmige Verlängerung (7) des die Polkontur bildenden Teils der Gießform mit einem innenliegenden Haltekonus (8).

Während der Anschmelzung der Fahnen ist für die erfindungsgemäße Vorrichtung eine zweistufige Kühlung vorgesehen, bei welcher zuerst die den Polen entsprechenden Schmelzinhalte der Gießform und darauf die vom Brückenblei gebildeten Schmelzinhalte jeweils gleichzeitig zum Erstarren gebracht worden. Dieser Vorgang erfordert gemäß Figur 2 mindestens ein Kühlgefäß (9), das bei geregeltem Zu- und Ablauf des Kühlmediums (z.B. Kühlwasser 10) von unten gegen die an Verbindungsträgern (11) gehalterten Gießformen gefahren wird und in einer ersten Stellung (linke Teilfigur) verharrt, bei welcher die Polkonturen (12) entsprechend dem Niveau a vorzugsweise so weit in das Kühlmedium eintauchen, daß die Polbrückenkonturen (13) gerade noch nicht benetzt werden. Während die Pole erstarren, wirkt das noch flüssige Brückenblei in beiden Gießformen nicht nur als Wärmespeicher, sondern auch als Materialspeicher. Dies ist wichtig, weil es beim Erstarren der Pole zu einer Volumenkontraktion kommt. Die damit einhergehende Gefahr von Lunkerbildungen wird durch die Gegenwart von noch schmelzflüssigem Brückenmaterial, welches durch Nachfließen in die Polform dort im Entstehen begriffene Vakuolen auffüllt, verhindert.

In der zweiten Kühlphase (rechte Teilfigur) wird der Kühlmittelstand weiter auf ein Niveau b angehoben, bei dem das Kühlmittel zumindest den gesamten Rücken des Polbrückenteiles der Gießform benetzt. Hierdurch wird mit dem Erstarren der Restschmelze der Anschmelzvorgang überhaupt beendet.

Durch die Figur 2 sind die den Kühlmittelständen a und b entsprechenden Gefäßpositionen verdeutlicht. Das Kühlgefäß kann aus einem Behälter mit oder ohne Zwischewand oder aus zwei Behältern, die simultan verfahren werden, bestehen.

Liegen der negativen Hälfte eines Plattensatzes Elektrodengitter und Plattenfahnen aus Kupfer zugrunde, die auch mit Blei bzw. Blei-Zinn-Legierungen beschichtet sein können, gilt auch für diese Anordnung der konstruktive Aufbau der Polbrücken nach dem oben beschriebenen Prinzip des Blocksystems. Mit dieser Anordnung kann die Kühlung ebenfalls nach dem oben aufgezeigten Zweistufen-Prinzip, d.h. zuerst Abschrecken des Polbleis, dann Erstarrenlassen des Polbrückenbleis, erfolgen. Jedoch verlangen die unterschiedlichen Vorgänge an den positiven Bleifahnen im Vergleich zu den negativen aus Kupfer oder auch beschichtetem Kupfer hier eine längere Wärmeeinwirkung seitens des schmelzflüssigen Brückenbleis auf die positiven Fahnen, also einen längeren Verbleib in demselben, damit eine gute und homogene Verschmelzung mit den Fahnen-Oberflächen gewährleistet ist. Dieser Forderung wird dadurch Rechnung getragen, daß man die zweite Kühlphase nicht simultan für beide Polaritäten, sondern mit einem Zeitvorsprung für die negative Plattensatzhälfte beginnen läßt. Das Polblei und das Brückenblei jeder Polarität unterliegen mithin nach wie vor den gleichen Kühlungsschritten, die aber, bedingt durch das unterschiedliche Fahnen-Material in den beiden Plattensatzhälften, verschieden getaktet sind. Die erfindungsgemäße Kühlanordnung setzt in diesem Fall das Vorhandensein zweier Kühlgefäße voraus und muß so eingerichtet sein, daß sie die Gießform für die eine Polarität unabhängig von derjenigen für die andere Polarität zur Kühlung der Schmelzinhalte verfahren kann.

**Patentansprüche**

1. Vorrichtung zum Anbringen von Polbrücken und Polen durch Angießen an die Fahnenableiter eines komplett montierten und von einer Aufnahmekassette über Kopf gehalterten Plattensatzes für eine Akkumulatorenzelle in Gestalt einer Gießform, die zur getrennten Aufnahme der negativen und der positiven Fahnen des Plattensatzes als Doppelwerkzeug ausgebildet ist, und die eine Anordnung zu einer Zweistufenkühlung umfaßt, dadurch gekennzeichnet, daß jede Gießform (1,5) und deren Wandstärke so bemessen ist, daß sie thermisch gleichwertige Blockabschnitte besitzt, die jeweils eine Plattenfahne und das auf diese Plattenfahne entfallende Brückenblei aufweisen und daß die auf jede Plattenfahne (3,6) entfallende Wärmemenge, die zusammengesetzt ist aus der Wärmekapazität und dem Volumen des auf jede Fahne entfallenden Brückenbleis sowie der Wärmekapazität und dem Volumen des jeder Plattenfahne zuzurechnenden Formenwandteils, im wesentlichen gleich ist.

2. Vorrichtung nach Anspruch 1, dadurch gekennzeichnet, daß die Plattenfahnen beider Polaritäten aus Blei oder Bleilegierungen bestehen, und daß die in die Schmelze eintauchende Oberfläche, die wärmeabführende Querschnittsfläche (4) und das in die Schmelze eintauchende Volumen einer jeden positiven und negativen Plattenfahne im wesentlichen gleich sind.

3. Vorrichtung nach den Ansprüchen 1 und 2, dadurch gekennzeichnet, daß sie eine Kühlanordnung enthält, die für beide Polaritäten simultan so verfahrbar ist, daß in einer ersten Stufe das im wesentlichen die Pole bildende Polblei und anschließend in einer zweiten Stufe zusätzlich das Brückenblei gekühlt wird.

4. Vorrichtung nach Anspruch 1, dadurch gekennzeichnet, daß die Elektrodengitter und Plattenfahnen der positiven Polarität aus Blei oder Bleilegierungen und diejenigen der negativen Polarität aus Kupfer, das auch mit Blei bzw. Blei-Zinn-Legierungen beschichtet sein kann, bestehen.

5. Vorrichtung nach den Ansprüchen 1 und 4, dadurch gekennzeichnet, daß sie eine Kühlanordnung enthält, die so verfahrbar ist, daß für beide Polaritäten in einer ersten Stufe mit unterschiedlicher Zeitdauer das im wesentlichen die Pole bildende Polblei und anschließend in einer zweiten Stufe zusätzlich das Brückenblei gekühlt wird.

**Claims**

1. Apparatus for attaching terminal bars and terminals by casting onto the vane current collectors of a plate group, mounted complete and held overhead by a receiving cassette, for an accumulator cell in the form of a casting mould which is constructed for separately receiving the negative and the positive vanes of the plate group as a double mould and which comprises an arrangement for two-stage cooling, characterized in that each casting mould (1, 5) and the wall thickness thereof is dimensioned such that it has thermally equivalent block sections which each have a plate vane and the bridge lead occurring at this plate vane, and in that the quantity of heat occurring at each plate vane (3, 6), composed from the heat capacity and the volume of the bridge lead occurring at each vane and from the heat capacity and the volume of the mould wall part to be calculated in with each plate vane, is substantially equal.

2. Apparatus according to Claim 1, characterized in that the plate vanes of both polarities comprise lead or lead alloys, and in that the surface dipping into the melt, the cross-sectional surface (4) removing heat and the volume which dips into the melt of each positive and negative plate vane are substantially equal.

3. Apparatus according to Claims 1 and 2, characterized in that it contains a cooling arrangement which can traverse simultaneously for both polarities such that in a first stage the terminal lead substantially forming the terminals and then in a second stage additionally the bridge lead are cooled.

4. Apparatus according to Claim 1, characterized in that the electrode grid and plate vanes of positive polarity comprise lead or lead alloys and those of negative polarity comprise copper which may also be coated with lead or lead/tin alloys.

5. Apparatus according to Claims 1 and 4, characterized in that it contains a cooling arrangement which can traverse such that, for both polarities, in a first stage of differing time duration the terminal lead substantially forming the terminals and then in a second stage additionally the bridge lead are cooled.

## Revendications

1. Dispositif pour la mise en place de barrettes d'interconnexion et de bornes par assemblage par la fonte aux pattes conductrices d'un bloc de plaques complètement monté et maintenu tête-bêche par une cassette de réception pour un élément d'accumulateur en forme d'un moule de coulée qui est configuré pour la réception séparée des pattes négatives et positives du bloc de plaques comme double outil, et qui comprend un agencement pour un refroidissement en deux étapes, caractérisé en ce que chaque moule (1, 5) et son épaisseur de paroi sont dimensionnés de façon qu'elle comporte des portions de bloc thermiquement équivalentes, qui comprennent chacune une patte de plaque et le plomb de barrette destiné à cette patte de plaque, et en ce que la quantité de chaleur destinée à chaque patte de plaque (3, 6), qui se compose de la capacité de chaleur et du volume du plomb de barrette destiné à chaque patte ainsi que de la capacité de chaleur et du volume de la partie de paroi de moule à attribuer à chaque patte de plaque, est sensiblement identique.

2. Dispositif selon la revendication 1, caractérisé en ce que les pattes de plaque des deux polarités sont réalisées en plomb ou en des alliages de plomb, et que la surface plongeant dans la fusion, la surface de section transversale (4) évacuant la chaleur et le volume plongeant dans la fusion de chaque patte de plaque positive ou négative sont sensiblement identiques.

3. Dispositif selon les revendications 1 et 2, caractérisé en ce qu'il comprend un agencement refroidisseur qui est déplaçable simultanément pour les deux polarités de façon que soit refroidi dans une première étape le plomb de borne formant essentiellement les bornes et ensuite dans une deuxième étape, supplémentairement, le plomb de barrette.

4. Dispositif selon la revendication 1, caractérisé en ce que les grilles d'électrodes et les pattes de plaques de la polarité positive sont réalisés en plomb ou en des alliages de plomb et celles de la polarité négative sont réalisés en cuivre qui pourrait aussi être recouvert de plomb ou d'alliages de plomb-étain.

5. Dispositif selon les revendications 1 et 4, caractérisé en ce qu'il comprend un agencement de refroidissement qui est déplaçable de telle façon que pour les deux polarités soit refroidis dans une première étape, à des durées de temps différentes, le plomb de borne formant essentiellement les bornes et ensuite dans une deuxième étape, supplémentairement, le plomb de barrette de connexion.

## Fig.1

a) (—)

b) (+)

## Fig. 2